# EUROPEAN PATENT SPECIFICATION

(11) **EP 1 063 878 B1**
(45) Date of publication and mention of the grant of the patent: **10.07.2002**
(21) Application number: 98912938.2
(22) Date of filing: 16.03.1998
(51) Int. Cl.: A01F 12/00, G01J 3/28

(54) **NEAR INFRARED SPECTROMETER USED IN COMBINATION WITH A COMBINE FOR REAL TIME GRAIN ANALYSIS**
NAHINFRAROT SPEKTROMETER ZUM GEBRAUCH IN KOMBINATION MIT EINEM MÄHDRESCHER FÜR ECHTZEITKORNANALYSE
SPECTROMETRE A INFRAROUGE PROCHE UTILISE EN ASSOCIATION AVEC UNE MOISSONNEUSE-BATTEUSE POUR L'ANALYSE DE GRAIN EN TEMPS REEL

(43) Date of publication of application: 03.01.2001
(73) Proprietor: Textron Systems Corporation, Wilmington, Massachusetts 01887 (US)
(72) Inventor: WRIGHT, Steven L., 7100 N.W. 62nd Avenue, Johnston, IA 50131-1000 (US); HOOD, C., Fred, P.O. Box 1000, Johnston, IA 50131-1000 (US)
(74) Representative: Thomson, Paul Anthony
(86) International application number: US9805105
(87) International publication number: WO9946971

(56) References cited:
- WO-A-85/00087
- WO-A-92/15192
- US-A- 4 752 689
- US-A- 5 406 084
- US-A- 5 751 421

## Description

### BACKGROUND OF THE INVENTION

### Field Of the Invention

The present invention relates to instruments for measuring constituents of harvested agricultural products. More particularly, though not exclusively, the present invention relates to a method and apparatus using near infrared spectrometers in combination with a combine for real time grain analysis.

### Problems In The Art

In the field of agriculture, it is important to analyze agricultural products such as grain to determine the amount of major constituents in the grain. This is particularly important when developing hybrid species of crops.

WO-A-9215192 discloses a harvesting vehicle or combine with a crop testing and evaluation system that includes an on-board microprocessor, a computer, and a plurality of mechanical measuring and testing devices that measure the weight, moisture content, and test weight of a crop. However, aside from moisture content, such a system provides very little information about the major constituents of the crop. Furthermore, like the conventional spectrometers described below, such mechanically-based measuring and testing devices have moving parts that are intolerant to the vibrations, dust and plant debris typically generated by the combine.

One prior art method of analyzing grain and other agricultural products, is using near infrared spectroscopy (NIR). NIR is a well established technique for detecting both chemical and physical properties of various materials. NIR provides an accurate and inexpensive method to analyze agricultural materials such as grain. Major constituents that can be detected by using NIR include moisture, protein, oil, starch, amino acids, extractable starch, density, test weight, and any other constituents or properties that are of commercial value.

There are various types of devices used for NIR. In general, these devices include light sensors in conjunction with light sources which are used with any number of measuring devices. In optical spectrometers, the incident light from a light source is passed through a monochrometor, which can be a filter or set of filters, a diffraction grating, or a prism whose angular displacement relative to the incoming light can be closely correlated with the single wavelength, or narrow band of wavelengths (which it sends on to the light sensor). The light sensor is selected so that its spectral responses match the wavelength of interest. The angular motion of the prism or diffraction grating can be mechanized so that a given spectrum is scanned at a known rate over a known time interval. Such a device is referred to as a scanning spectrometer. The wavelength of an observed peak can them be determined from the time counted from the start of a scan. Spectrometers may also be referred to as spectrophotometers when their spectral range extends between ultraviolet to infrared.

The constituent content of a grain sample is measured most accurately by prior art systems by grinding the sample of the grain to particulate form. The ground sample is then irradiated with near infrared light. The reflected radiation is detected at narrow band wavelengths in the NIR spectrum to obtain raw reflectance data of the sample. The data can be used to provide accurate measurements of the content of constituents of the grain samples. In many prior art systems, it is difficult to obtain accurate measurements of the grain constituents without first grinding the grain into particulate form.

Other prior art systems use scanning or oscillating spectrophotometric instruments. In such an instrument, a photo detector detects light energy which is scanned through a spectrum at a rapid rate. Such an instrument employs an optical grating which receives light through an entrance slit and disperses the light into a spectrum directed toward an exit slit. The optical grating is oscillated in order to rapidly scan the light transmitted through the exist slit through the spectrum dispersed by the grating. Another prior art instrument uses filters which are tilted as they pass through a light beam to scan the transmitted light through a spectrum. Either type of instrument, the oscillating optical grating or the tilt filter type can be operated over a spectrum covering near infrared to analyze agricultural products such as grain. Using an oscillating grating or tilting filter type of instrument, the user can measure the reflectivity of the sample at narrow wavelength increments to determine the constituent contents of a grain sample. To use an oscillating grating or tilting filter instrument, the narrow bandwidth light is transmitted through the exit slit used to illuminate the grain sample. The light reflected from the sample is detected by photo detectors and the resulting photo detector signal is used to determine the constituent contents of the sample. As the grating oscillates, the center frequency of the light that irradiates the sample is swept through the NIR spectrum. Light from the diffraction grating that is reflected by the sample is detected by the photo detector. As an alternative to detecting the energy reflected from the sample, the energy may be transmitted through the sample and detected after being transmitted through the sample. In addition, instead of irradiating the sample with the output from the spectrophotometer, the sample can be irradiated with constant wideband light and a reflected light being applied to the spectrophotometer.

If a grain sample is not ground, the light absorbence and reflectance varies considerably from sample to sample. This variation is caused by light scatter from the whole grain kernels and by the nonlinear surface reflectance effects. This variation makes it difficult to obtain accurate measurements from whole grain samples.

The spectrometers discussed require frequent calibration in order to generate accurate results. The calibrations must be performed frequently due to various dynamic factors including the change in light from a light source due to temperature sources. A typical method of calibrating a spectrometer is to replace the sample with a standard sample, for example, a white ceramic tile having high reflectance. The spectrometer scans the standard sample to provide standard values which are used to calibrate the spectrometer. While this calibration method works fine in a lab environment, it could be impossible, or at least impractical in the environment of a combine.

The spectrometers discussed above have several disadvantages. The spectrometers discussed are only suitable for use in a laboratory. Prior art methods of grain analysis have a major disadvantage resulting from the large amount of sample handling. The samples must be harvested, collected, bagged, labeled, dried, and finally sent to the NIR lab for constituent analysis. This excessive sample handling adds both cost and time to the analysis. A need can therefore be seen for an NIR instrument combined with a combine to automate the process of collecting an analyzing grain samples. Such a system would reduce the cost and time of the analysis. Such a system could provide plant breeders and grain farmers with real time information.

The main problem with an NIR instrument combined with a machine such as a combine is that prior art grain analysis instrumentation is very sensitive to mechanical vibrations. Scanning and oscillating spectrometers require very precise mechanical movements in order to obtain accurate results. The extreme vibrations found in the environment of a combine would result in damaged and inaccurate instrumentation equipment. In addition to the vibration, the combine environment is very dirty. The amount of dust and plant debris would severely effect the effectiveness of a conventional spectrometer.

Another problem with combining NIR instrumentation with a combine is that current NIR equipment requires a long time period for analysis. In the field of hybrid crop breeding, a large number of test plots are used to test hybrid plots. A typical test plot of hybrid corn, for example, is comprised of two rows of corn with a length of 17 ft. (5.2 meters). A research combine used to harvest the test plots goes through each test plot in approximately 15 seconds. A typical spectrometer used in a lab to analyze grain requires considerable more time than 15 seconds to analyze the grain sample. Therefore, even if convention NIR instrumentation were installed on a combine, the speed of harvesting test plots would be slowed down considerably by the slow speed of the NIR instrumentation.

A need can therefore be seen for NIR equipment in combination with a combine which could operate effectively in the environment of a combine which also is capable of analyzing grain samples in a short period of time.

### Features Of The Invention

A general feature of the present invention is the provision of a method and apparatus for measuring constituents of harvested agricultural products in a combine which overcomes problems found in the prior art.

A further feature of the present invention is the provision of a method and apparatus for measuring constituents of harvested agricultural products on a combine which uses a monochrometor with a photodiode array detector which has no moving optical parts and thus is more resilient to mechanical vibrations.

A further feature of the present invention is the provision of a method and apparatus of measuring constituents of agricultural products on a combine which is capable of measuring the constituents in a short time period.

Further features and advantages of the present invention include:

An apparatus and method of measuring the constituents of agricultural products on a combine which analyzes grain samples while the grain is flowing through a portion of the combine to obtain a more accurate measurement.

An apparatus and method of measuring the constituents of agricultural products on a combine in which the monochrometor is located within the cab of the combine and is connected to the optical sensor by a fiber optic connection.

An apparatus and method of measuring the constituents of agricultural products on a combine which can use either the reflectance or transmittance of radiation through the agricultural product.

An apparatus and method of measuring the constituents of agricultural products on a combine which measures the constituents in real time and stores the measurements for later use.

An apparatus and method of measuring the constituents of agricultural products on a combine which can be automatically calibrated.

An apparatus and method of measuring the constituents of agricultural products on a combine which senses the reflectance of the sample in more than one position in order to obtain higher accuracy.

These as well as other features and advantages of the present invention will become apparent from the following specification and claims.

### SUMMARY OF THE INVENTION

The present invention relates to a method and apparatus for measuring constituents of harvested agricultural products on a combine. The invention uses near infrared spectography equipment which has no moving optical parts in order to withstand the vibrations found on a combine. A radiation source is used to irradiate a grain sample while the reflected radiation is transmitted by a fiber optic bundle to a monochrometor located within or near the cab of the combine. The monochrometor includes a diffraction grating or its equivalent which spreads the reflected light over a desired wavelength range over a photodiode collector which is comprised of a plurality of photodetectors. By analyzing the intensities of the reflected radiation, the major constituents of the grain can be determined. The apparatus of the present invention may be used with existing grain analysis equipment on a research combine which determines the grains weight, moisture content, volume, etc. of the grain. In this way, the process of harvesting and analyzing grain in a test plot can be fully automated.

### BRIEF DESCRIPTION OF THE DRAWINGS

Figure 1 is a perspective view of a research combine utilizing the present invention.
Figure 2 is a front view of the test chamber assembly of the combine shown in Figure 1.
Figure 3 is a side view of the test chamber assembly of the combine shown in Figure 1.
Figure 4 is a block diagram of the present invention.
Figure 5 is an enlarged view of the sensor head shown in Figure 4.

### DETAILED DESCRIPTION OF THE PREFERRED EMBODIMENT

The present invention will be described as it applies to its preferred embodiment. It is not intended that the present invention be limited to the described embodiment. It is intended that the invention cover all alternatives, modifications, and equivalences which may be included within the spirit and scope of the invention.

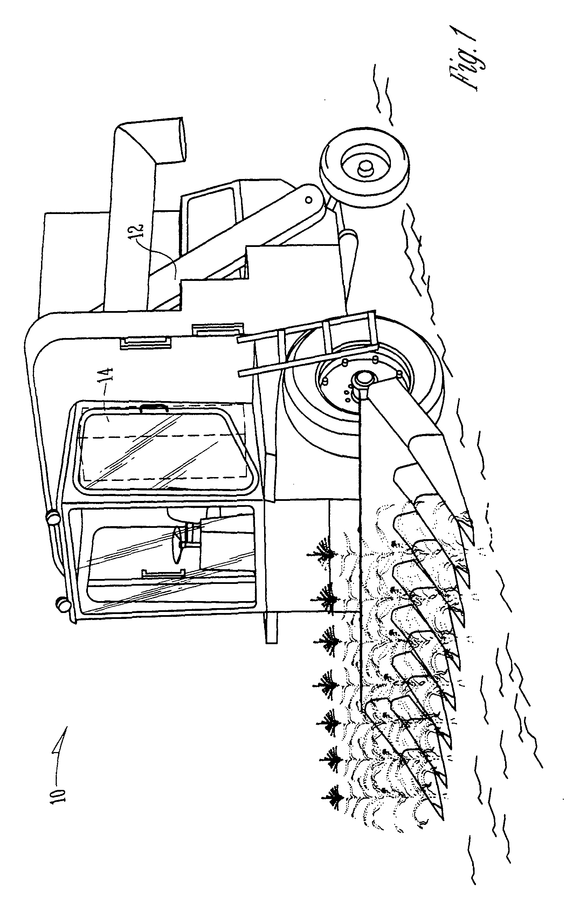

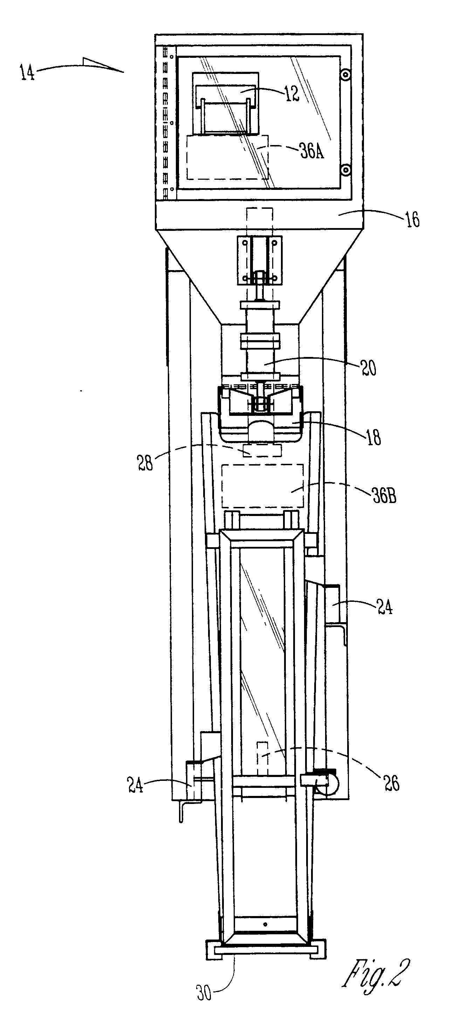

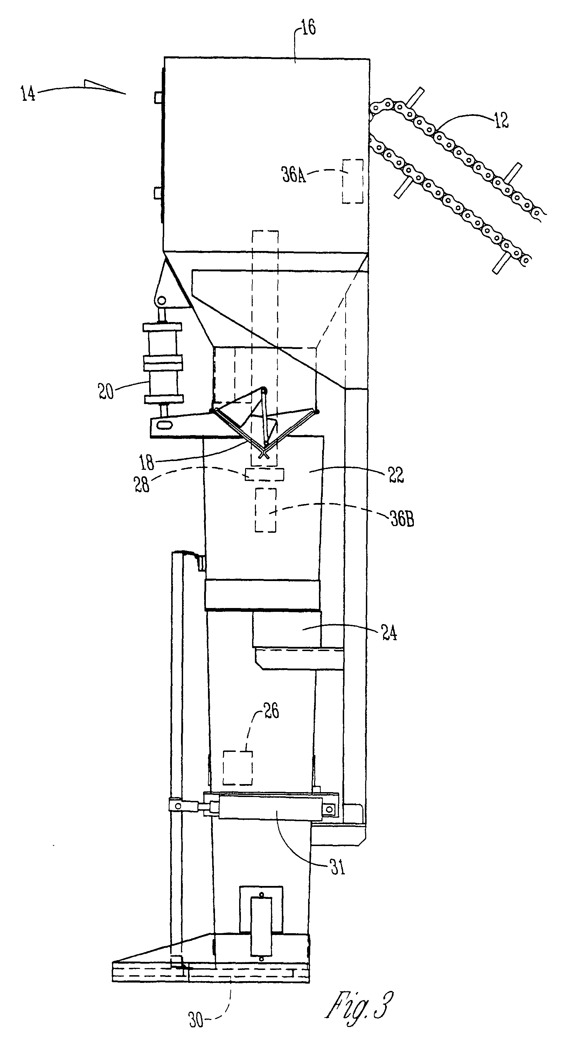

Figure 1 shows a typical research combine 10 which may be used with the present invention. A research combine 10 is used by the plant hybrid industry to harvest test plots and to evaluate the harvested grain. The combine 10 is similar to a standard combine but is adapted to take samples of the grain from the test plots and analyze properties of the grain in the field. The combine 10 includes a sample elevator 12 which moves grain to a test chamber assembly 14 which is shown in detail in Figures 2 and 3.

The test chamber assembly 14 is designed to collect a sample of grain and to evaluate the grain to determine various properties of the grain. As shown in Figures 2 and 3, the grain enters the test chamber assembly 14 from the top from the elevator 12. After the grain falls off the elevator 12, it is collected in a chute 16. A door 18 prevents the grain from leaving the chute 16. The door 18 is controlled by a pneumatic door cylinder 20. The door 18 is controlled by the door cylinder 20 and moves from an opened to a closed position or any position in-between. When the door 18 is opened, the grain will fall into the test chamber 22. When the grain is in the test chamber 22, the sample is analyzed in a number of conventional ways. One or more load cells 24 are used to determine the weight of the grain within the chamber 22. A moisture sensor 26 is used to sense the moisture of the grain. A sonar device 28 is positioned above the chamber 22 and can determine how full the chamber is in order to determine the volume of grain in the chamber 22. Once these measurements are taken, an exit door 30 can be opened to empty the test chamber 22 so that a sample from the next test plot can be taken. The door 30 is controlled by an actuator 31 and its related linkages. A typical test plot of corn, for example, has two rows of corn each seventeen feet long (5.2 meters). It takes the research combine 10 approximately fifteen seconds to harvest each test plot, so all the grain analysis must be completed within fifteen seconds.

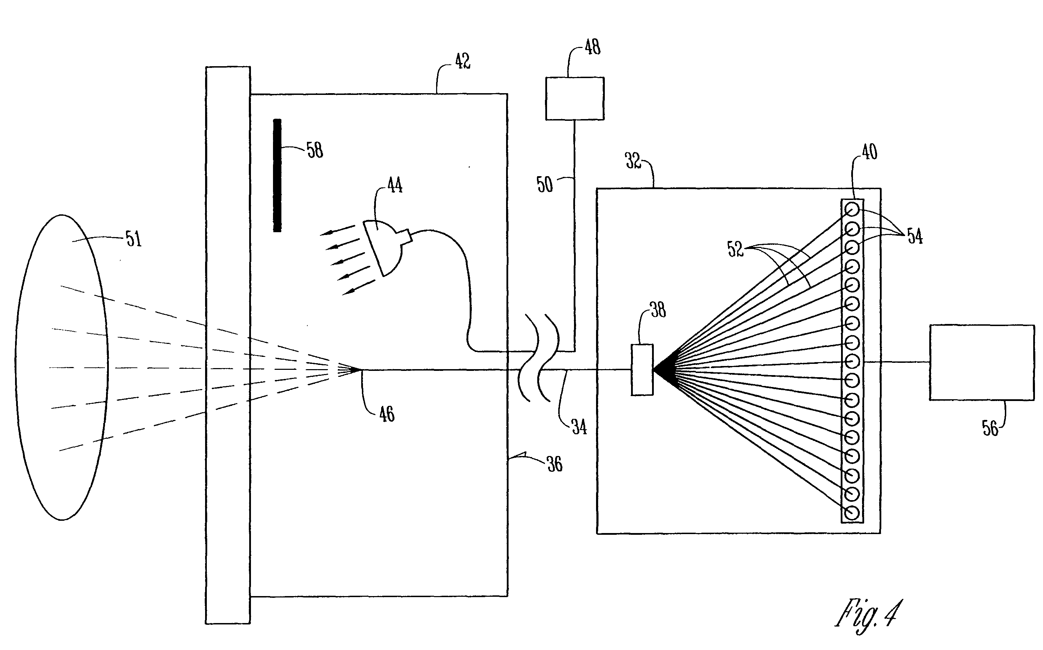

Figure 4 is a block diagram of the present invention. Figure 4 shows how the test chamber assembly 14 is used with the present invention. A monochrometor 32, located in or near the cab of the combine 10, is connected to a fiber optic cable 34. The other end of the fiber optic cable 34 is connected to a sensor head 36. The sensor head 36 can be located in a number of locations relative to the test chamber assembly 14. Figures 2 and 3 show two possible locations for the sensor head 36. In a first location, a sensor head 36A is located below the elevator 12 and senses the grain as it falls into the chute 16. In a second location, a sensor head 36B is located below the chute 16 and the door 18 such that the grain is sensed as it falls through the door 18. At the second location, the amount of grain flowing past the sensor head 36B can be accurately controlled by controlling the amount that the door 18 is opened. Preferably, the area around the sensor head 36 is enclosed to limit the amount of stray light which affects the performance of the sensor head 36.

The monochrometor 32 used with the present invention includes a fixed diffraction grating 38 and a photodiode array 40. It is important to note that because the photodiode array 40 is used, the monochrometor 32 includes no moving optical parts. This is desired in order to withstand the extreme vibrations present in the environment of a combine. The photodiode array 40 also greatly increases the speed at which a sample can be analyzed since the entire desired spectrum of reflected light is transmitted at once, rather than scanning and transmitting one range at a time. The monochrometor 32 is connected to a sensor head 36 by a bundle of fiber optic cables 34. While the fiber optic cable 34 could take on many forms, preferably the cable is comprised of 25 individual fiber optic strands.

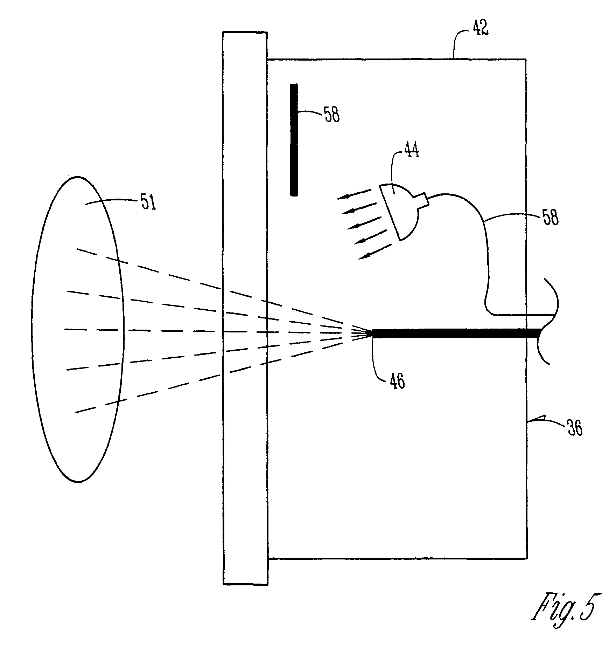

Figure 5 is an enlarged view of the sensor head 36. The sensor head 36 is comprised of a housing 42 which encloses a lamp 44 and a sensor 46. The sensor 46 could take on may forms, but preferably is simply comprised of the ends of the fiber optic strands of the fiber optic cable 34. The lamp is powered by a power source 48 (Figure 4) which could be provided by the combine 10 or the monochrometor 32. The power source is connected to the lamp 44 by a power cable 50 which is preferably bundled with the fiber optic cable 34 to reduce the number of cables between the sensor head 36 and the monochrometor 32. The lamp 44 is preferably a halogen lamp which provides a wide spectrum of radiation including radiation in the desired bandwidth, 400 to 1100 nanometers (nm). The lamp 44 is aimed at a desired angle towards the grain samples (discussed below). Figure 5 also shows a white reference tile 58. The white reference tile 58 has a known reflectance and therefore can be used to calibrate the present invention.

The light sensor 46 is also positioned at a desired location relative to the grain sample 51 and lamp 44 (discussed below). When the lamp 44 irradiates the grain sample with light, some of the radiation is reflected off the grain sample toward the sensor 46. The reflected light is transmitted through the fiber optic cable 34 to the diffraction grating 38 in the monochrometor 32 (Figure 4). The diffraction grating scatters the light over an infinite number of paths represented by lines 52. The photodiode array 40 includes 512 photo detectors 54 which are disposed along the photodiode array 40. For purposes of clarity in the drawings, all 512 photo detectors 54 are not shown. Each photo detector 54 will receive light from the diffraction grating over just a small range of wavelengths. The diffraction grating and photo detectors 54 are arranged in the monochrometor 32 so that light with a spectral range of 400 through 1100 nanometers is distributed along the array 40. It can be seen that by using a photodiode array with 512 photo detectors 54, the "scanning" time goes down by a factor of 512 compared to the prior art scanning spectrometer. The photodiode array 40 is connected to a processor 56 which collects data from the photodiode array 40 and stores and analyzes the data.

The present invention improves on accuracy and speed over the prior art. To help improve accuracy of the system, the grain sample presentation is made constant and repeatable. This results in consistent results. The samples are sensed in the same way and in the same location for each successive sample. In a lab, lab technicians may not analyze different samples in exactly the same way. A more consistent result is obtained by automating the analyzation process. Also, sensing the samples as the grain is moving improves the accuracy and reliability since an "average" sample is taken, rather than looking at still kernels which have surfaces that vary from one part of the kernel to the other. Since the samples can be analyzed at a high rate of speed, the processor can average a number of readings to obtain a consistent result for each sample. For example, if the monochrometor outputs spectrum data every 34 msec, then the processor can average 100 successive spectrums together and output a more reliable and stable spectrum every 3.4 seconds.

The present invention operates as follows. When harvesting a test plot, the research combine 10 harvests the grain in the test plot in a conventional manner. Referring to Figures 2 and 3, as grain from the harvested test plot enters the test chamber assembly 14 from the sample elevator 12, the chute 16 is filed with a sample of the grain. When the chamber 22 is ready for loading, the chute door 18 is opened by activating the door cylinder 20. The sensor head 36B of the present invention is located slightly below the door 18 and senses the grain as it flows past the sensor head 36B. The door 18 is opened a predetermined amount to allow an even flow of grain past the sensor head 36B. As the grain flows past the sensor head 36, light from lamp 44 is irradiated on the grain sample with some of the light reflecting off the grain sample to the sensor 46 (Figure 5). The reflected light is transmitted through the fiber optic bundle 34 to a diffraction grating 38 in the monochrometor 32, which is located within or near the cab of the combine 10 (Figure 4). The diffraction grating 38 spreads the reflected light over the photodiode array 40 in a spectrum ranging from approximately 400 nanometers to 1100 nm in wavelength. A processor 56 is connected to the photodiode array and collects data relating to the strength of radiation at each individual photodiode 54. By analyzing the strength of the radiation at each photodiode 54, the processor can determine the amount of constituents in the sample of grain. For example, if the radiation strength at a certain photodiode is relatively low, then it can be determined that the grain sample has absorbed an amount of radiation at that wavelength. By knowing what certain substances absorb or reflect, it can be determined what substances are present in the sample. The data collected from the monochrometor 32 is processed by the processor 56 and/or stored for later use. Once all the grain from the chute 16 has fallen into the test chamber 22, the test assembly 14 will evaluate the grain for weight, moisture, volume, etc., using conventional methods as discussed above. In this way, the sample of grain from a given test plot can be thoroughly evaluated including the grain sample weight, moisture, volume, and amount of major constituents present.

As an alternative to using reflectance to measure constituents of a grain sample, light could be irradiated through the grain sample and sensed after being transmitted through the sample. Also, various geometries of lamps and sensors could be used. The lamps and sensors could also be separated into two or more components rather than being contained in a single component such as the sensor heads 36 shown in the Figures. The number of fiber optic strands in each embodiment could also vary greatly. Other types of radiation could be used with the present invention other than NIR. For example Fourier Transform IR (FTIR) could be used. Also, the diffraction grating 38 could be replaced with other elements for spreading the light in the monochrometor.

The preferred embodiment of the present invention has been set forth in the drawings and specification, and although specific terms are employed, these are used in a generic or descriptive sense only and are not used for purposes of limitation. Changes in the form and proportion of parts as well as in the substitution of equivalents are contemplated as circumstances may suggest or render expedient without departing from the spirit and scope of the invention as further defined in the following claims.

## Claims

1. An apparatus for measuring constituents of harvested agricultural products (51) on a combine (10) that has a data processor (56) thereon, the apparatus being **characterized by**: a monochrometor (32) mounted to the combine (10), the monochrometor (32) having no moving optical components; a radiation source (44) coupled to the combine (10) and disposed near the harvested products (51) for irradiating the products; a fiber optic cable (34) connected to the monochrometor for transmitting radiation reflected off the agricultural products (51) to the monochrometor (32); and the monochrometor (32) being connected to the data processor (56) for identifying and determining the amount of constituents in the agricultural products (51).

2. The apparatus of claim 1 wherein the monochrometor (32) is further **characterized by**: a dispersive element (38) immovably coupled to the monochrometor (32); and a photodiode array (40) immovably coupled to the monochrometor (32) for detecting radiation dispersed by the dispersive element (38).

3. The apparatus of claim 2 wherein the dispersive element (38) is **characterized by** a diffraction grating (38).

4. The apparatus of claim 1 is further **characterized by** a sensor assembly (36) coupled to the combine (10) proximate the harvested products (51).

5. The apparatus of claim 4, wherein the sensor assembly (36) is further **characterized by** a frame mounted to the combine (10), wherein the radiation source (44) is coupled to the frame, and wherein the fiber optic cable (34) is coupled to the frame in a position which allows the fiber optic cable (34) to receive reflected radiation from the products (51).

6. The apparatus of claim 5 wherein the fiber optic cable (34) is further **characterized by** a plurality of fiber optic strands having first and second ends, wherein the first ends of the fiber optic strands form a radiation sensor.

7. The apparatus of claim 4 further **characterized by** a reflective calibration surface (58), wherein the reflective calibration surface (58) is positioned where radiation from the radiation source (44) is incident on the reflective calibration surface (58).

8. The apparatus of claim 1 further **characterized by** a data storage device for storing data processed by the data processor (56)

9. A method of measuring constituents of harvested agricultural products comprising the steps of: providing a combine for harvesting a field of crops; providing a monochrometor coupled to the combine, the monochrometor including a photodiode array and a fixed dispersive element; providing a radiation source coupled to the combine near a source of the agricultural product harvested by the combine; applying radiation to the product; sensing radiation that is reflected off of the product; and analyzing the sensed radiation to determine various constituents of the agricultural product.

10. A method of analyzing on a combine an agricultural product harvested from a test plot comprising the steps of: harvesting the agricultural product with a research combine; collecting a sample of the product and containing the sample in a chamber; weighing the chamber to determine the weight of the sample; sensing the moisture content of the sample in the chamber; sensing the volume of the sample in the chamber; and determining the identity and amount of constituents in the sample, further comprising the steps of: irradiating the sample with radiation, sensing radiation which reflects off of the sample, and analyzing the spectrum of the reflected radiation to determine the identity and amount of constituents in the sample.

## Patentansprüche

1. Vorrichtung zum Messen von Bestandteilen geernteter landwirtschaftlicher Produkte (51) auf einer Erntemaschine (10), der einen Prozessor (56) an Bord hat, wobei die Vorrichtung **gekennzeichnet ist durch**:
ein Strahlungsfilter (32), das an der Erntemaschine (10) angebracht ist, wobei das Strahlungsfilter (32) keine beweglichen optischen Komponenten aufweist; eine Strahlungsquelle (44), die mit der Erntemaschine (10) verbunden und in der Nähe der geernteten Produkte (51) zur Bestrahlung der Produkte angeordnet ist; ein mit dem Strahlungsfilter verbundenes Lichtleitkabel (34) zum Übertragen von Strahlung, die von den landwirtschaftlichen Produkten (51) auf das Strahlungsfilter (32) reflektiert wird; und das Strahlungsfilter (32) mit dem Prozessor (56) verbunden ist, um die Menge von Bestandteilen in den landwirtschaftlichen Produkten (51) zu identifizieren und zu bestimmen.

2. Vorrichtung nach Anspruch 1, wobei das Strahlungsfilter (32) weiter **gekennzeichnet ist durch**:
ein Dispersionselement (38), das mit dem Strahlungsfilter (32) unbeweglich verbunden ist; und eine Fotodioden- Anordnung (40), die mit dem Strahlungsfilter (32) unbeweglich verbunden ist, um Strahlung zu erfassen, die **durch** das Dispersionselement (38) zerstreut wird.

3. Vorrichtung nach Anspruch 2, in der das Dispersionselement (38) durch ein optisches Gitter (38) gekennzeichnet ist.

4. Vorrichtung nach Anspruch 1, weiter **gekennzeichnet durch** eine Sensoranordnung (36), die unmittelbar an den geernteten Produkten (51) mit der Erntemaschine (10) verbunden ist.

5. Vorrichtung nach Anspruch 4, bei der die Sensoranordnung (36) außerdem **gekennzeichnet ist durch** einen an der Erntemaschine (10) angebrachten Rahmen, wobei die Strahlungsquelle (44) mit dem Rahmen gekoppelt ist und bei der das Lichtleiterkabel (34) mit dem Rahmen in einer Position verbunden ist, die es dem Lichtleiterkabel (34) erlaubt, reflektierte Strahlung von den Produkten (51) aufzunehmen.

6. Vorrichtung nach Anspruch 5, bei der das Lichtleiterkabel (34) weiter **gekennzeichnet ist durch** eine Vielzahl von faseroptischen Bündeln mit ersten und zweiten Enden, wobei die ersten Enden der faseroptischen Bündel einen Strahlungssensor bilden.

7. Vorrichtung nach Anspruch 4, weiter **gekennzeichnet durch** eine reflektierende Eichfläche (58), wobei die reflektierende Eichfläche (58) angeordnet ist, wo Strahlung von der Strahlungsquelle (44) auf die reflektierende Eichfläche (58) einfällt.

8. Vorrichtung nach Anspruch 1, weiter **gekennzeichnet durch** eine Datenspeichervorrichtung zum Speichern von **durch** den Prozessor (56) verarbeiteten Daten.

9. Verfahren zur Messung von Bestandteilen geernteter landwirtschaftlicher Produkte mit den Schritten: Bereitstellen einer Erntemaschine zum Abernten eines Feldes mit Früchten; Vorsehen eines mit der Erntemaschine verbundenen Spektralfilters, wobei das Spektralfilter eine Fotodioden- Anordnung und ein feststehendes Dispersionselement umfasst; Bereitstellen einer Strahlungsquelle, die mit der Erntemaschine in der Nähe einer Quelle des durch die Erntemaschine geernteten landwirtschaftlichen Produktes verbunden ist; Anwenden von Strahlung auf das Produkt; Erfassen von Strahlung, die von dem Produkt reflektiert wird; und Analysieren der erfassten Strahlung zum Bestimmen von verschiedenen Bestandteilen des landwirtschaftlichen Produktes.

10. Verfahren zum Analysieren eines von einem Versuchsschlag geernteten landwirtschaftlichen Produktes auf einer Erntemaschine, mit den Schritten:
Ernten des landwirtschaftlichen Produktes mit einer Untersuchungs-Erntemaschine, Sammeln einer Probe des Produktes und Aufnehmen der Probe in einer Kammer; Wägen der Kammer zur Bestimmung des Gewichts der Probe; Fühlen des Feuchtigkeitsgehaltes der Probe in der Kammer; Sensieren des Volumens der Probe in der Kammer; und Bestimmen der Identität und Menge von Bestandteilen der Probe in der Kammer; und
Bestimmen der Identität und Menge von Bestandteilen in der Probe, weiter umfassend die Schritte: Bestrahlen der Probe mit Strahlung, Sensieren der Strahlung, die von der Probe reflektiert wird, und Analysieren des Spektrums der reflektierten Strahlung zum Bestimmen der Identität und Menge von Bestandteilen in der Probe.

## Revendications

1. Dispositif de mesure des constituants de produits agricoles moissonnés (51), monté sur une moissonneuse-batteuse (10) qui possède une unité de traitement de données (56) embarquée, le dispositif étant ***caractérisé par* :** un monochromateur (32) monté sur la moissonneuse-batteuse (10), le monochromateur (32) n'ayant aucun composant optique mobile ; une source (44) de rayonnement couplée à la moissonneuse-batteuse (10) et disposée près des produits moissonnés (51) afin d'émettre un rayonnement sur les produits ; un câble (34) de fibres optiques raccordé au monochromateur pour transmettre le rayonnement renvoyé par les produits agricoles (51) au monochromateur (32) ; et le monochromateur (32) étant relié à l'unité de traitement de données (56) afin d'identifier et de déterminer la quantité de constituants dans les produits agricoles (51).

2. Dispositif selon la Revendication 1, dans lequel le monochromateur (32) est ***caractérisé*** de plus ***par*** : un élément dispersif (38) couplé de manière permanente au monochromateur (32) ; et un réseau de photodiodes (40) couplé de manière permanente au monochromateur (32) pour détecter le rayonnement dispersé par l'élément dispersif(38).

3. Dispositif selon la Revendication 2, dans lequel l'élément dispersif (38) est ***caractérisé par*** un réseau de diffraction (38).

4. Dispositif selon la Revendication 1, ***caractérisé*** de plus ***par*** un ensemble capteur (36) couplé à la moissonneuse-batteuse (10) à proximité des produits moissonnés (51).

5. Dispositif selon la Revendication 4, dans lequel l'ensemble capteur (36) est de plus ***caractérisé par*** un châssis monté sur la moissonneuse-batteuse (10), dans lequel la source de rayonnement (44) est couplée au châssis et dans lequel le câble (34) de fibres optiques est couplé au châssis dans une position qui permet au câble (34) de fibres optiques de recevoir le rayonnement réfléchi par les produits (51).

6. Dispositif selon la Revendication 5, dans lequel le câble (34) de fibres optiques est de plus ***caractérisé par*** une pluralité de brins de fibres optiques ayant une première et une seconde extrémités, dans lequel les premières extrémités des brins de fibres optiques forment un capteur de rayonnement.

7. Dispositif selon la Revendication 4, ***caractérisé*** de plus ***par une*** surface (58) de calibrage réfléchissante, dans lequel la surface (58) de calibrage réfléchissante est positionnée en un emplacement où le rayonnement provenant de la source (44) de rayonnement est incident sur la surface de calibrage réfléchissante (58).

8. Dispositif selon la Revendication 1, ***caractérisé*** de plus ***par*** un dispositif de stockage de données pour stocker les données traitées par l'unité (56) de traitement des données.

9. Procédé de mesure des constituants de produits agricoles moissonnés, comprenant les étapes consistant à : fournir une moissonneuse-batteuse pour moissonner un champ à récolter ; fournir un monochromateur couplé à la moissonneuse-batteuse, le monochromateur comportant un réseau de photodiodes et un élément dispersif fixe ; fournir une source de rayonnement couplée à la moissonneuse-batteuse près d'une source du produit agricole moissonné par la moissonneuse-batteuse ; appliquer le rayonnement au produit ; détecter le rayonnement qui est renvoyé par le produit ; et analyser le rayonnement détecté pour déterminer divers constituants du produit agricole.

10. Procédé d'analyse sur une moissonneuse-batteuse d'un produit agricole moissonné d'une parcelle d'essai, comprenant les étapes consistant à : moissonner le produit agricole avec une moissonneuse-batteuse pour la recherche ; recueillir un échantillon du produit et placer l'échantillon dans une chambre ; peser la chambre pour déterminer le poids de l'échantillon ; détecter la teneur en humidité de l'échantillon contenu dans la chambre ; détecter le volume de l'échantillon contenu dans la chambre; et déterminer l'identité et la quantité des constituants de l'échantillon, comprenant de plus les étapes consistant à : émettre un rayonnement sur l'échantillon, détecter le rayonnement qui est réfléchi par l'échantillon, et analyser le spectre du rayonnement réfléchi pour déterminer l'identité et la quantité de constituants dans l'échantillon.
